# FASCICULE DE BREVET EUROPEEN

(11) **EP 1 742 858 B1**
(45) Date de publication et mention de la délivrance du brevet: **01.10.2008**
(21) Numéro de dépôt: 05739613.7
(22) Date de dépôt: 16.03.2005
(51) Int. Cl.: B65G 67/20

(54) **INSTALLATION ET PROCEDE POUR LE TRANSFERT DE CHARGE ENTRE UNE PLATE-FORME DE TRANSFERT ET UN VEHICULE DE TRANSPORT**
ANLAGE UND VERFAHREN ZUR ÜBERTRAGUNG EINER LAST ZWISCHEN EINER TRANSFERPLATTFORM UND EINEM TRANSPORTFAHRZEUG
INSTALLATION AND METHOD FOR TRANSFERRING A LOAD BETWEEN A TRANSFER PLATFORM AND A TRANSPORT VEHICLE

(30) Priorité: 17.03.2004 FR 0402748
(43) Date de publication de la demande: 17.01.2007
(73) Titulaire: Scierie Piveteau, 85140 Sainte Florence (FR)
(72) Inventeur: PIVETEAU, Pierre, F-85140 Sainte Florence (FR); PIVETEAU, Jean, F-85140 Sainte Florence (FR)
(74) Mandataire: Laget, Jean-Loup
(86) Numéro de dépôt international: PCT/FR2005/000625
(87) Numéro de publication internationale: WO 2005/100216

(56) Documents cités:
- EP-A- 0 867 400
- US-A- 3 169 652
- US-A- 3 337 066
- US-A- 4 457 424
- US-A- 5 186 596
- US-A1- 2002 085 904
- PATENT ABSTRACTS OF JAPAN vol. 0071, no. 10 (M-214), 13 mai 1983 (1983-05-13) & JP 58 031827 A (MATSUSHITA BUTSURIYUU SOUKO KK; others: 01), 24 février 1983 (1983-02-24)

## Description

La présente invention concerne une installation et un procédé pour le transfert de charge, en particulier containérisable, entre une plate-forme de chargement et/ou de déchargement de charge, dite plate-forme de transfert, et notamment un véhicule de transport.

Le transport de charges en container s'est développé ces dernières années. Le chargement des containers s'avère souvent une étape très longue parce qu'il est difficile d'accéder à l'intérieur des containers. Il en résulte une mauvaise optimisation de ce transport de marchandises. A ce jour, aucune solution ne donne satisfaction pour un chargement ou respectivement un déchargement rapides de tels containers en garantissant une optimisation de l'utilisation du volume utile.

Ainsi, le brevet US 2002/085904 décrit une installation pour le transfert de charge qui comporte une plate-forme de transfert de charge constituée d'un chemin de transfert sur lequel est positionnable une charge par l'intermédiaire d'une plate-forme mobile, représentée en (18) aux figures. Cette plate-forme peut ensuite être déplacée pour être positionnée sur le plancher d'un camion. Ce déplacement est obtenu par l'intermédiaire d'un chariot représenté en (42). Ce chariot moteur est attelable à la plate-forme par l'intermédiaire de bras verrouillables à l'intérieur de logements ménagés dans la plate-forme (18). Le chariot est donc déplaçable en va-et-vient par une transmission pour permettre, lors de ce déplacement, d'être tour à tour pousseur du plateau et de sa charge ou tracteur de ce même plateau et de sa charge. La réalisation de l'élément de transfert support de charge sous forme d'un plateau présente un certain nombre d'inconvénients. En effet, le plateau doit, en raison de sa surface importante, présenter des éléments de guidage qui coopèrent avec des éléments de guidage complémentaires du plancher du véhicule à charger. Ce qui nécessite d'une part un aménagement spécifique du véhicule, d'autre part oblige à une perte en hauteur de la hauteur utile de chargement. En outre, ce plateau doit, pour permettre une optimisation de son chargement, présenter une longueur correspondant à la longueur totale du chargement qui avoisine généralement les 12 mètres dans le cas de conteneur. Il en résulte un surcoût économique non acceptable au niveau du prix du plateau, étant entendu que le plateau demeure à l'intérieur du véhicule jusqu'au déchargement.

Le brevet US-3.169.652 décrit quant à lui une installation dont l'élément de transfert support de charge est formé par un traîneau souple. A nouveau, il est nécessaire de disposer d'une surface de chargement aux propriétés particulières pour permettre le déplacement du traîneau à la surface du plateau de chargement, sans quoi, des coincements s'opéreront. Par ailleurs, le coût d'un tel traîneau pour résister aux déchirures et aux forces de traction demeure élevé. En outre, le déchargement de la charge est fastidieux car il nécessite d'atteler une barre d'attelage à une extrémité du traîneau de type tapis pour permettre le déchargement de l'ensemble.

Un but de la présente invention est donc de proposer une installation pour le transfert de charge dont la conception permet la préparation en temps masqué d'une charge destinée à être transférée dans un container ou tout autre moyen de transport similaire tout en offrant une possibilité de chargement rapide en une seule fois de ce container, la préparation en temps masqué de la totalité du chargement permettant d'optimiser le remplissage du container.

Un autre but de la présente invention est de proposer une installation pour le transfert de charge dont la conception de l'élément de transfert support de charge permet en une seule fois le transfert de la totalité du chargement sans aménagement spécifique de la surface de réception du véhicule à charger et à un coût restant économiquement viable.

Un autre but de la présente invention est de proposer une installation dont la conception permet indifféremment le chargement ou respectivement le déchargement d'un container et ce en un temps extrêmement court.

A cet effet, l'invention a pour objet une installation pour le transfert de charge, en particulier containérisable, entre une plate-forme de chargement et/ou de déchargement de charge, dite plate-forme de transfert et notamment un véhicule de transport, ladite plate-forme de transfert de charge étant constituée d'un chemin de transfert sur lequel est positionnable une charge, de préférence containérisable, par l'intermédiaire d'au moins un élément de transfert support de charge, cet élément de transfert support de charge étant mobile axialement le long du chemin de transfert par l'intermédiaire d'un chariot moteur attelable audit élément, ce chariot étant déplaçable en va-et-vient par une transmission associée à un organe moteur pour permettre, lors de ses déplacements, d'être tour à tour, pousseur dudit élément et sa charge et tracteur du même élément et de sa charge en fonction des opérations de transfert à effectuer dans lequel l'installation comporte au moins deux éléments de transfert support de charge et chaque élément de transfert support de charge se présente sous forme d'un longeron attelable audit chariot, caractérisée en ce que chaque longeron est d'une longueur au moins égale à la totalité de la longueur de la charge à transférer de manière à opérer le transfert en une seule fois et à optimiser le chargement.

Grâce à la présence de la plate-forme de transfert de l'installation, il est possible de préparer la totalité de la charge à transférer en temps masqué.

Parallèlement, la présence de longerons de transfert permet indifféremment de charger ou respectivement de décharger le container de sa charge, ces opérations de transfert s'effectuant en un temps extrêmement court. Par ailleurs, les longerons de transfert accompagnant la charge à transférer sont réutilisables après utilisation de la charge. De ce fait, le coût de mise en oeuvre reste acceptable. En effet, ces longerons sont simples à fabriquer, à un faible coût y compris lorsqu'ils atteignent une grande longueur. Ils permettent ainsi d'optimiser la disposition des différentes charges sur lesdits longerons tout en autorisant un transfert en un seul déplacement.

L'invention a encore pour objet un procédé pour le transfert de charge, en particulier containérisable, entre une plate-forme de chargement et/ou de déchargement de charge, dite plate-forme de transfert et notamment un véhicule de transport, au moyen d'une installation du type précité, caractérisé en ce qu'il consiste, dans le cas d'une opération de chargement, par exemple sur un plancher de charge d'un véhicule, à positionner sur la plate-forme de l'installation au moins deux longerons de transfert dont la longueur est au moins égale à la longueur totale du chargement à transférer, à préparer en temps masqué ladite charge sur lesdits longerons, à opérer avant, pendant ou après préparation de la charge l'ensemble des réglages permettant de positionner le chemin délimité par la plate-forme de transfert de charge de l'installation à hauteur du plancher de charge du véhicule à charger disposé à une extrémité dudit chemin de ladite plate-forme et à transférer la totalité du chargement au moyen du chariot positionné sur la plate-forme de transfert de charge, ce chariot entraînant simultanément la charge et les longerons de transfert pour amener l'ensemble sur le plancher de charge du véhicule.

L'invention sera bien comprise à la lecture de la description suivante d'exemples de réalisation, en référence aux dessins annexés dans lesquels :
la figure 1 représente une vue schématique de côté d'une installation conforme à l'invention dans une position arrimée à un véhicule de transport routier, l'installation étant représentée dans une position dans laquelle la charge est destinée à être introduite dans un container ;
la figure 2 représente de manière schématique une vue de côté d'une installation conforme à l'invention dans une position dans laquelle la charge est destinée à être extraite d'un container posé sur le plateau de charge d'un véhicule routier ;
la figure 3 représente une vue partielle de dessus d'une installation conforme à l'invention dans laquelle certains éléments ont été représentés en transparence pour faciliter la compréhension ;
la figure 4 représente une vue en coupe d'une installation conforme à l'invention ;
la figure 5 représente une autre vue en coupe d'une installation conforme à l'invention, la coupe ayant été effectuée au niveau du chariot et
la figure 6 représente une vue schématique partielle de côté de la transmission et de son organe moteur.

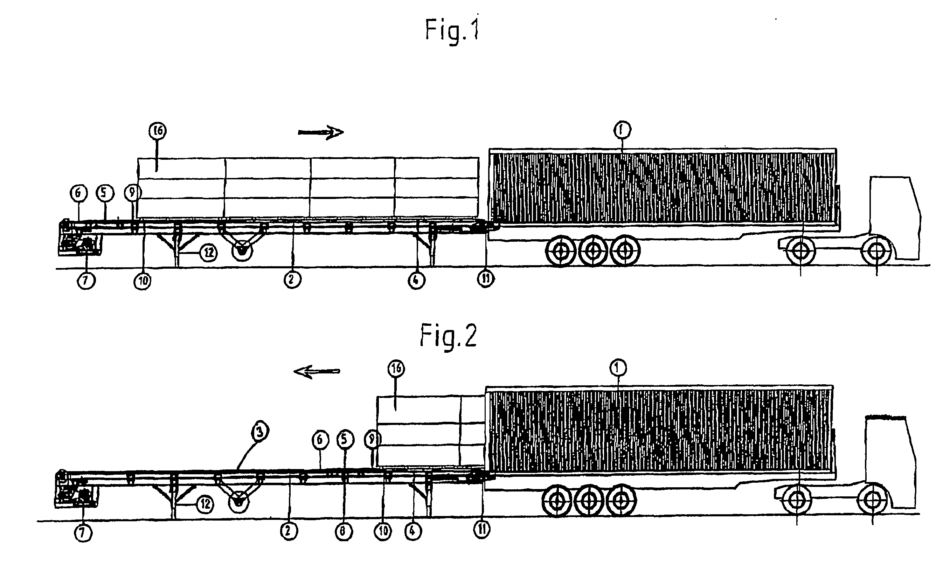

Comme mentionné ci-dessus, l'installation, objet de l'invention, est destinée à permettre le transfert de charge entre une plate-forme 2 de chargement et/ou de déchargement de charge 16, dite plate-forme de transfert, notamment et un véhicule 1 de transport. Par véhicule, on peut entendre un camion, un navire, un wagon ou tout autre engin. Dans les exemples représentés, le transfert s'opère entre une plate-forme 2 de chargement et un véhicule 1 routier dont le plateau de charge est surmonté d'un container, la charge 16 devant être transférée ou respectivement extraite de ce container. La plate-forme 2 de transfert de charge 16 de cette installation est constituée d'un chemin 3 de transfert sur lequel est positionnable une charge 16 par l'intermédiaire d'éléments de transfert support de charge rigides. De manière caractéristique à l'invention, ces éléments de support de charge sont constitués par des longerons 4. La solution longerons est préférée en raison de sa simplicité, de son coût, de la possibilité de transférer la totalité du chargement en une seule fois et de l'absence d'aménagements de la surface réceptrice. Ainsi, les longerons 4 de transfert sont interposés entre la charge 16, qui peut être constituée de bloc de matière, d'éléments de bois ou autre et la face du dessus de la plate-forme 2 de transfert. Les longerons 4 de transfert sont, dans les exemples représentés, constitués de poutres en lamellé collé. Leur longueur est au moins égale à la longueur de la charge à transférer qui doit elle-même de préférence couvrir la totalité de la surface réceptrice. Dans le cas de chargement de conteneur, la longueur des longerons peut atteindre au moins 10 mètres et est de préférence voisine de 12 mètres, cette longueur correspondant à la longueur totale de la plate-forme à charger. Ces longerons 4 sont mobiles axialement, le long du chemin 3 de transfert ménagé par la plate-forme 2 de transfert, par l'intermédiaire d'un chariot 5 moteur. Ce chariot 5 moteur est attelable de manière temporaire aux longerons 4. Ce chariot 5 est par ailleurs déplaçable en va-et-vient par une transmission 6 associée à un organe 7 moteur. Ce chariot 5 permet ainsi, lors de ses déplacements, d'être tour à tour, pousseur des longerons 4 et de leur charge 16, en vue par exemple d'un transfert de la charge de la plate-forme 2 de chargement vers le véhicule 1 routier et le container qui l'équipe, ou inversement, d'être tracteur des mêmes longerons 4 et de leur charge 16 pour permettre un déchargement de la charge disposée à l'intérieur du container équipant le véhicule 1 routier. Ces deux possibilités sont représentées respectivement aux figures 1 et 2. Bien évidemment, lorsque le chariot est utilisé comme élément pousseur des longerons 4 de transfert, il n'est pas nécessaire d'associer, c'est-à-dire de coupler mécaniquement, le chariot 5 aux longerons 4.

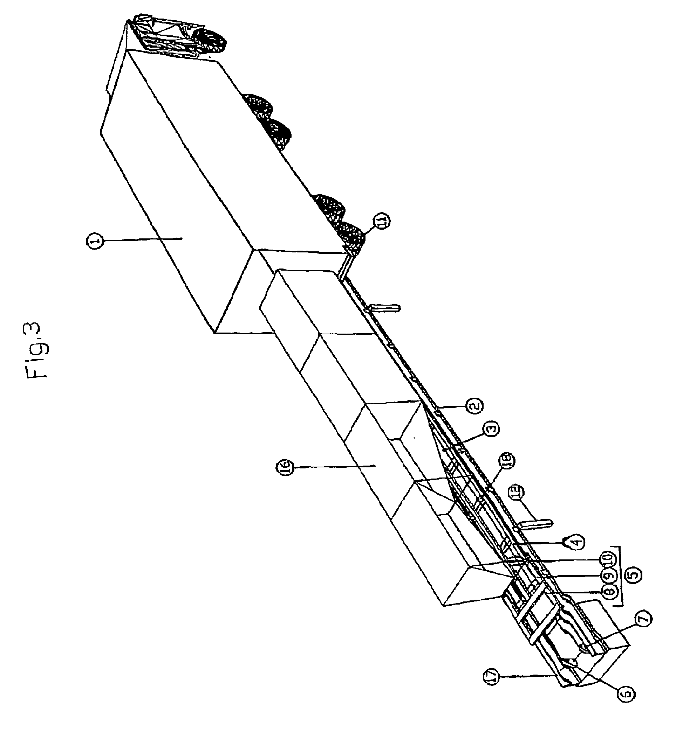

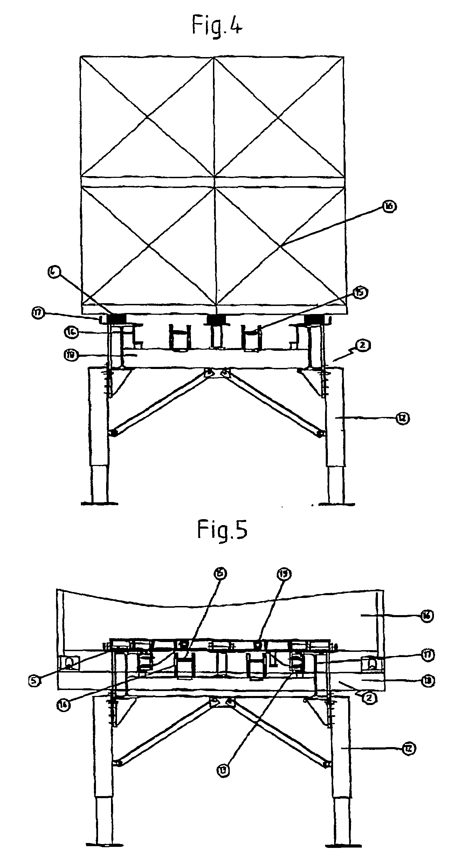

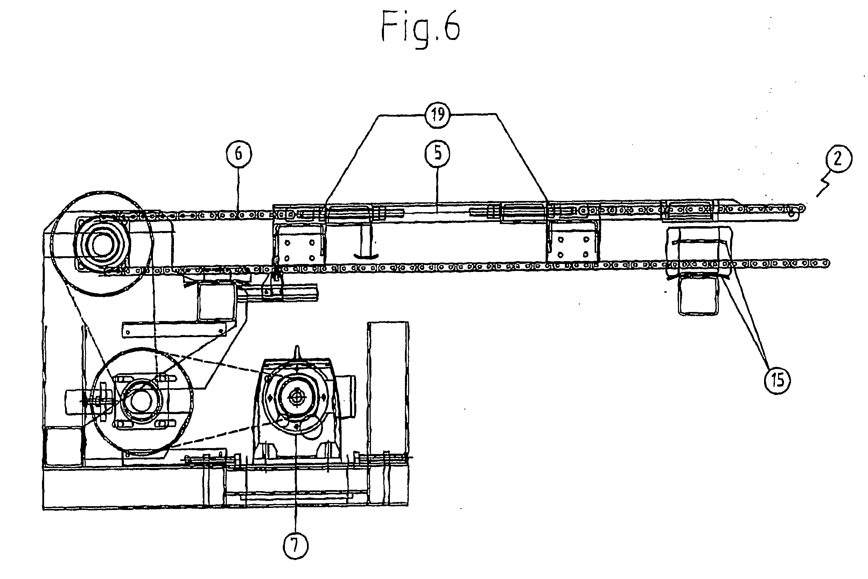

Dans les exemples représentés et comme l'illustre en particulier la figure 3, ce chariot 5 est constitué d'un bâti 8 pourvu de brancards 9 portant, à leur extrémité, des éclisses 10 assemblables de manière temporaire aux extrémités des longerons 4 de transfert pour permettre de tracter ces dernières. Les éclisses 10 sont formées par de simples plats métalliques éventuellement coudés, la liaison au longeron s'effectuant par vis, clavetage ou goupille. Les longerons sont à cet effet pré-percés à au moins une de leurs extrémités. L'attelage s'opère ainsi en un temps extrêmement court, sans difficulté. Ce chariot 5 est entraîné en déplacement par l'intermédiaire d'une transmission 6 sans fin, de préférence à chaîne. Ainsi, la figure 5 illustre les points 19 de fixation de la chaîne au chariot. L'organe 7 moteur est quant à lui constitué par un motoréducteur d'entraînement couplé par l'intermédiaire d'une transmission sans fin à un arbre intermédiaire, lui-même couplé à nouveau par l'intermédiaire d'une autre transmission sans fin à des galets autour desquels la chaîne s'enroule dans un sens ou dans l'autre suivant le sens d'entraînement en rotation du motoréducteur. La chaîne est donc fixée, comme l'illustre la figure 6, par l'une de ses extrémités à un bord du chariot et, par son autre extrémité, à un bord opposé dudit chariot pour permettre, lors d'un entraînement dans un premier sens de la chaîne qui décrit une boucle, le déplacement du chariot dans le sens d'un éloignement du véhicule et, à l'inverse, lors d'un entraînement en rotation du moteur 7 dans un autre sens, le déplacement de la chaîne et par suite du chariot 5 dans un sens entraînant un rapprochement du chariot 5 du véhicule 1. Pour faciliter le déplacement de ce chariot 5, ce dernier est muni de patins 13 ou de galets de guidage destinés à s'insérer à l'intérieur de paliers 14 axiaux continus ménagés dans la plate-forme 2. Cette plate-forme 2 de transfert est en effet formée de poutres 17 longitudinales reliées entre elles par des traverses 18 pour former un plan de support de charge ajouré. Dans les exemples représentés, cette plate-forme 2 comporte au moins trois poutres 17 longitudinales parallèles constituant chacune une surface d'appui et éventuellement de guidage d'un longeron 4 de transfert. Ainsi, deux poutres sont réalisées sous forme de poutre en I dont la face du dessus est munie d'un rebord périphérique externe pour constituer un rail de guidage du longeron 4 de transfert. La poutre centrale délimite quant à elle une surface d'appui non guidée du longeron 4 de transfert. Il est prévu, entre les poutres 17, des paliers 15 axiaux support de la transmission 6 décrite ci-dessus.

La plate-forme 2 est encore équipée, si nécessaire, de pieds 12 réglables en hauteur pour permettre la mise à niveau du plan de support de charge de la plate-forme par rapport au plancher du conteneur porté par le véhicule 1. Cette plate-forme peut également être équipée de roues de manière à être réalisée sous forme d'une plate-forme roulante autorisant son déplacement en fonction des opérations de transfert à effectuer. Evidemment, elle reste libre sur ses côtés pour que les chargements soient toujours aisés.

Pour permettre ces opérations de transfert sans risque, il est prévu, à l'une des extrémités de la plate-forme 2 de transfert, un dispositif 11 d'arrimage pour la solidarisation de l'installation au véhicule 1 à charger.

Les opérations de transfert s'effectuent de la manière suivante : l'installation étant disposée en un endroit prédéterminé, le véhicule 1 à charger, dont le plateau de charge est équipé d'un container, est positionné à l'une des extrémités de la plate-forme 2 auquel il est arrimé par un dispositif 11 d'arrimage approprié fonctionnant généralement par clavetage. Parallèlement, la position de la plate-forme 2 est ajustée en hauteur pour permettre la mise à niveau du chemin 3 délimité par la plate-forme 2 avec le plancher du container à charger ou respectivement à décharger. Dans le cas d'une opération de chargement de ce container, la charge 16 à transférer a d'ores et déjà été p réparée en temps masqué sur la plate-forme 2 de transfert. A cet effet, des longerons 4 de transfert ont été positionnés sur la plate-forme 2. Ces longerons 4 de transfert ont été ensuite surmontés de la charge 16 dont le calcul a été optimisé pour garantir un remplissage maximal du container.

Lorsque l'ensemble des réglages ont été effectués, le chariot 5, positionné sur la plate-forme, est entraîné en déplacement, dans le sens de la flèche représentée à la figure 1, pour pousser la charge et les longerons 4 de transfert et amener cet ensemble à l'intérieur du container. Cette opération de chargement peut donc s'effectuer de manière extrêmement rapide.

A l'inverse, lors d'une opération de déchargement d'un container équipant un véhicule routier, on procède aux mêmes opérations préliminaires, à savoir fixation du dispositif d'arrimage et réglage de la hauteur de la plate-forme par rapport au plancher du container à décharger. Le chariot est ensuite amené au voisinage du container et est attelé par l'intermédiaire des éclisses 10 aux longerons 4 de transfert. Cette opération d'attelage s'effectue généralement à l'aide de deux vis ou similaires. Une fois le chariot 5 attelé aux longerons 4,il suffit alors de déplacer le chariot 5 dans le sens de la flèche représentée à la figure 2 pour obtenir l'extraction de la totalité de la charge supportée par les longerons 4 de transfert du container. A nouveau, cette opération peut s'effectuer de manière extrêmement rapide. La charge 16 est alors placée en attente sur la plate-forme 2 jusqu'à déchargement de cette charge.

Grâce à une telle installation, il en résulte un gain de temps important lors des opérations de chargement ou respectivement de déchargement qui peuvent s'effectuer en un temps extrêmement court. Parallèlement, le chargement des containers est optimisé, la disposition de la charge à l'intérieur du container pouvant être calculée à l'avance et préparée de manière à optimiser son remplissage.

## Revendications

1. Installation pour le transfert de charge, en particulier containérisable, entre une plate-forme (2) de chargement et/ou de déchargement de charge (16), dite plate-forme de transfert et notamment un véhicule (1) de transport, ladite plate-forme (2) de transfert de charge étant constituée d'un chemin (3) de transfert sur lequel est positionnable une charge (16), de préférence containérisable, par l'intermédiaire d'au moins un élément de transfert support de charge, cet élément de transfert support de charge étant mobile axialement le long du chemin (3) de transfert par l'intermédiaire d'un chariot (5) moteur attelable audit élément, ce chariot (5) étant déplaçable en va-et-vient par une transmission (6) associée à un organe (7) moteur pour permettre, lors de ses déplacements, d'être tour à tour, pousseur dudit élément et sa charge (16) et tracteur du même élément et de sa charge en fonction des opérations de transfert à effectuer, dans lequel l'installation comporte au moins deux éléments de transfert support de charge et chaque élément de transfert support de charge se présente sous forme d'un longeron (4) attelable audit chariot, **caractérisée en ce que** chaque longeron (4) est d'une longueur au moins égale à la totalité de la longueur de la charge (16) à transférer de manière à opérer le transfert en une seule fois et à optimiser le chargement, et **en ce que** le chariot (5) est constitué d'un bâti (8) pourvu de brancards (9) portant, à leur extrémité, des éclisses (10) assemblables de manière temporaire aux extrémités des longerons (4) de transfert.

2. Installation selon la revendication 1,
**caractérisée en ce qu'**il est prévu, à l'une des extrémités de la plate-forme (2) de transfert, un dispositif (11) d'arrimage pour la solidarisation de l'installation au véhicule (1) à charger.

3. Installation selon l'une des revendications 1 à 2,
**caractérisée en ce que** la plate-forme (2) est formée de poutres (17) longitudinales reliées entre elles par des traverses (18) pour former un plan de support de charge ajouré.

4. Installation selon la revendication 3,
**caractérisée en ce que** la plate-forme (2) comporte au moins trois poutres (17) longitudinales parallèles constituant chacune une surface d'appui et éventuellement de guidage d'un longeron (4) de transfert.

5. Installation selon la revendication 4,
**caractérisée en ce qu'**il est prévu, entres lesdites poutres (17) des paliers axiaux (15) support de la transmission (6).

6. Installation selon l'une des revendications 1 à 5,
**caractérisée en ce que** la plate-forme (2) est équipée de pieds (12) réglables en hauteur et est éventuellement réalisée sous forme d'une plate-forme roulante.

7. Installation selon l'une des revendications 1 à 6,
**caractérisée en ce que** le chariot (5) est entraîné en déplacement par l'intermédiaire d'une transmission (6) sans fin, de préférence à chaîne.

8. Installation selon l'une des revendications 1 à 7,
**caractérisée en ce que** le chariot (5) est muni de patins (13) ou de galets de guidage destinés à s'insérer à l'intérieur de paliers (14) axiaux continus ménagés dans ladite plate-forme (2).

9. Installation selon l'une des revendications 1 à 8,
**caractérisée en ce que** les longerons (4) de transfert sont constitués de poutres en lamellé collé.

10. Procédé pour le transfert de charge, en particulier containérisable, entre une plate-forme (2) de chargement et/ou de déchargement de charge (16), dite plate-forme de transfert et notamment un véhicule (1) de transport, au moyen d'une installation conforme à l'une des revendications 1 à 9,
**caractérisé en ce qu'**il consiste, dans le cas d'une opération de chargement, par exemple sur un plancher de charge d'un véhicule, à positionner sur la plate-forme (2) de l'installation au moins deux longerons (4) de transfert dont la longueur est au moins égale à la longueur totale du chargement à transférer, à préparer en temps masqué ladite charge sur lesdits longerons, à opérer avant, pendant ou après préparation de la charge l'ensemble des réglages permettant de positionner le chemin (3) délimité par la plate-forme (2) de transfert de charge de l'installation à hauteur du plancher du charge du véhicule à charger disposé à une extrémité dudit chemin de ladite plate-forme et à transférer la totalité du chargement au moyen du chariot (5) positionné sur la plate-forme (2) de transfert de charge, ce chariot (5) entraînant simultanément la charge et les longerons (4) de transfert pour amener l'ensemble sur le plancher de charge du véhicule.

## Claims

1. Installation for the transfer of a load, which in particular can be containerised, between a platform (2) for loading and/or unloading of a load (16), which is known as the transfer platform, and in particular a transport vehicle (1), the said load transfer platform (2) consisting of a transfer path (3) on which there can be positioned a load (16) which can preferably be containerised, by means of at least one load support transfer element, this load support transfer element being mobile axially along the transfer path (3) by means of a driving carriage (5) which can be coupled to the said element, this carriage (5) being able to be displaced to-and-fro by a drive (6) which is associated with a motor unit (7) in order, during its displacements, to allow it in turn to thrust the said element and its load (16) and draw the same element and its load according to the transfer operations to be carried out, wherein the installation comprises at least two load support transfer elements and each load support transfer element is in the form of a side member (4) which can be coupled to the said carriage, **characterised in that** each side member (4) has a length which is at least equal to the entire length of the load (16) to be transferred, such as to implement the transfer in a single occasion and to optimise the loading, and **in that** the carriage (5) consists of a frame (8) which is provided with shafts (9) which support at their end fishplates (10) which can be assembled temporarily on the ends of the transfer side members (4).

2. Installation according to claim 1, **characterised in that**, at one of the ends of the transfer platform (2), a stowage device (11) is provided in order to render the installation integral with the vehicle (1) to be loaded.

3. Installation according to one of claims 1 and 2, **characterised in that** the platform (2) consists of longitudinal beams (17) which are connected to one another by cross-members (18) in order to form an open-worked load support plane.

4. Installation according to claim 3, **characterised in that** the platform (2) comprises at least three parallel longitudinal beams (17), which each constitute a surface for support and optionally guiding of a transfer side member (4).

5. Installation according to claim 4, **characterised in that** axial bearings (15) to support the drive (6) are provided between the said beams (17).

6. Installation according to one of claims 1 to 5, **characterised in that** the platform (2) is equipped with feet (12) with an adjustable height, and is optionally produced in the form of a rolling platform.

7. Installation according to one of claims 1 to 6, **characterised in that** the carriage (5) is displaced by means of an endless drive (6), and preferably a chain drive.

8. Installation according to one of claims 1 to 7, **characterised in that** the carriage (5) is provided with guide rollers or runners (13) which are designed to be inserted inside continuous axial bearings (14) provided in the said platform (2).

9. Installation according to one of claims 1 to 8, **characterised in that** the transfer side members (4) consist of glued laminar beams.

10. Method for the transfer of a load, which in particular can be containerised, between a platform (2) for loading and/or unloading of a load (16), which is known as the transfer platform, and in particular a transport vehicle (1), by means of an installation according to one of claims 1 to 9, **characterised in that**, in the case of a loading operation, for example onto a loading deck of a vehicle, it consists of positioning on the platform (2) of the installation at least two transfer side members (4), the length of which is at least equal to the entire length of the load to be transferred, of preparing the said load on the said side members in masked time, of carrying out before, during or after preparation of the load, all of the adjustments which make it possible to position the path (3) delimited by the load transfer platform (2) of the installation at the height of the loading deck of the vehicle to be loaded, disposed at one end of the said path of the said platform, and of transferring all of the load by means of the carriage (5) positioned on the load transfer platform (2), this carriage (5) driving the load and the transfer side members (4) simultaneously in order to bring the assembly onto the loading deck of the vehicle.

## Patentansprüche

1. Anlage für den Transfer einer Last, insbesondere einer containergängigen Last, zwischen einer Plattform (2) zum Beladen und/oder Entladen einer Last (16), einer so genannten Transferplattform, und insbesondere einem Transportfahrzeug (1), wobei die Transferplattform (2) eine Transferbahn (3) umfasst, auf der mithilfe mindestens eines Last tragenden Transferelementes eine vorzugsweise containergängige Last (16) positionierbar ist, wobei das Last tragende Transferelement mithilfe eines an das Transferelement anhängbaren Antriebsschlittens (5) in axialer Richtung entlang der Transferbahn (3) beweglich ist, wobei der Schlitten (5) über ein mit einem Antriebselement (7) verbundenes Getriebe (6) hin und her verfahrbar ist, um bei seinen Fahrten das Transferelement und seine Last (16) nach und nach in Abhängigkeit von den auszuführenden Transferarbeiten schiebt beziehungsweise zieht, wobei die Anlage mindestens zwei Last tragende Transferelemente umfasst und jedes Last tragende Transferelement in Form eines an den Antriebsschlitten anhängbaren Längsträgers (4) ausgebildet ist, **dadurch gekennzeichnet, dass** jeder Längsträger (4) mindestens eine Länge aufweist, die der Gesamtlänge der zu transferierenden Last (16) entspricht, so dass der Transfer in einem Zug erfolgt und das Beladen optimiert wird, und dass der Schlitten (5) einen Rahmen (8) umfasst, der mit Seitenträgern (9) versehen ist, die an ihrem Ende Laschen (10) tragen, die temporär mit den Enden der Transferlängsträger (4) verbindbar sind.

2. Anlage nach Anspruch 1, **dadurch gekennzeichnet, dass** an einem der Enden der Transferplattform (2) eine Kupplungsvorrichtung (11) für die Befestigung der Anlage an dem zu beladenden Fahrzeug (1) vorgesehen ist.

3. Anlage nach einem der Ansprüche 1 bis 2, **dadurch gekennzeichnet, dass** die Plattform (2) von Längsbalken (17) gebildet ist, die über Querträger (18) miteinander verbunden sind, um eine durchbrochene, Last tragende Ebene zu bilden.

4. Anlage nach Anspruch 3, **dadurch gekennzeichnet, dass** die Plattform (2) mindestens drei parallele Längsbalken (17) umfasst, die jeder eine Auflagefläche und gegebenenfalls eine Führungsfläche für einen Transferlängsträger (4) bilden.

5. Anlage nach Anspruch 4, **dadurch gekennzeichnet, dass** zwischen den Balken (17) Axiallager (15) vorgesehen sind, die das Getriebe (6) tragen.

6. Anlage nach einem der Ansprüche 1 bis 5, **dadurch gekennzeichnet, dass** die Plattform (2) mit höhenverstellbaren Füßen (12) ausgerüstet und gegebenenfalls als rollende Plattform ausgeführt ist.

7. Anlage nach einem der Ansprüche 1 bis 6, **dadurch gekennzeichnet, dass** der Schlitten (5) von einem Endlosgetriebe (6), vorzugsweise einem Kettengetriebe, angetrieben wird.

8. Anlage nach einem der Ansprüche 1 bis 7, **dadurch gekennzeichnet, dass** der Schlitten (5) mit Führungsschuhen (13) oder Führungsrollen ausgestattet ist, die dafür vorgesehen sind, in die in der Plattform (2) eingebauten durchgehenden Axiallager (14) eingesetzt zu werden.

9. Anlage nach einem der Ansprüche 1 bis 8, **dadurch gekennzeichnet, dass** die Transferlängsträger (4) aus schichtverleimten Balken bestehen.

10. Verfahren zum Transfer einer Last, insbesondere einer containergängigen Last, zwischen einer Plattform (2) zum Beladen und/oder Entladen einer Last (16), einer so genannten Transferplattform, und insbesondere einem Transportfahrzeug (1) mit einer Anlage nach einem der Ansprüche 1 bis 9, **dadurch gekennzeichnet, dass** es im Falle eines Beladens, beispielsweise auf eine Ladefläche eines Fahrzeugs, darin besteht, auf der Plattform (2) der Anlage mindestens zwei Transferlängsträger (4) zu positionieren, deren Länge mindestens der Gesamtlänge der zu transferierenden Last entspricht, die Last hauptzeitparallel auf den Längsträgern vorzubereiten, vor, während oder nach der Vorbereitung der Last alle Einstellungen vorzunehmen, die die Positionierung der von der Transferplattform (2) begrenzten Bahn (3) auf Höhe der Ladefläche des zu beladenden Fahrzeugs erlauben, die an einem Ende der Bahn der Plattform angeordnet ist, und die gesamte Ladung mit dem auf der Transferplattform (2) positionierten Schlitten (5) zu transferieren, wobei der Schlitten (5) gleichzeitig die Last und die Transferlängsträger (4) antreibt, um die Einheit auf die Ladefläche des Fahrzeugs zu bringen.
